# EUROPEAN PATENT SPECIFICATION

(11) **EP 2 501 015 B1**
(45) Date of publication and mention of the grant of the patent: **17.06.2020**
(21) Application number: 10829667.4
(22) Date of filing: 19.10.2010
(51) Int. Cl.: B60L 53/14, B60L 50/61, B60L 58/20, B60L 1/00, B60K 6/28, B60W 10/26, B60W 10/30, B60W 30/188, E02F 9/20, H02J 7/00

(54) **POWER SUPPLY SYSTEM**
STROMVERSORGUNGSSYSTEM
SYSTÈME D'ALIMENTATION ÉLECTRIQUE

(30) Priority: 10.11.2009 JP 2009257348; 04.03.2010 JP 2010048221
(43) Date of publication of application: 19.09.2012
(73) Proprietor: Takeuchi Mfg, Co., Ltd, Hanishina-gun, Nagano 389-0601 (JP)
(72) Inventor: KUMEUCHI, Kengo, Hanishina-gun Nagano 389-0605 (JP); YANAIDA, Motoki, Hanishina-gun Nagano 389-0605 (JP)
(74) Representative: Patentwerk B.V.
(86) International application number: PCT/JP2010/006190
(87) International publication number: WO 2011/058699

(56) References cited:
- WO-A1-2007/105462
- JP-A- 6 233 466
- JP-A- 2006 304 551
- JP-A- 2007 071 197
- JP-A- 2007 107 231
- JP-A- 2007 228 715

## Description

### TECHNICAL FIELD

The present invention relates to a power supply system used in a device powered by an electrical motor, and in particular to a power supply system used for a configuration, used mainly in construction machines, in which a hydraulic unit powered by an electrical motor is used.

### TECHNICAL BACKGROUND

Examples of machines comprising a hydraulic unit having a configuration in which a hydraulic pump is run by an electric motor and machine oil fed from the hydraulic pump is used to operate a hydraulic actuator include excavators and other construction machines. Examples of hydraulic actuators include hydraulic motors and hydraulic cylinders. For example, in a construction machine, by operating the hydraulic actuator, cylinders of a travel device, revolving device, boom, arm, bucket, and other devices are operated, and the machine performs travelling, digging, and other tasks. An excavator can not only perform the tasks of travelling and digging, but revolving the vehicle or moving soil.

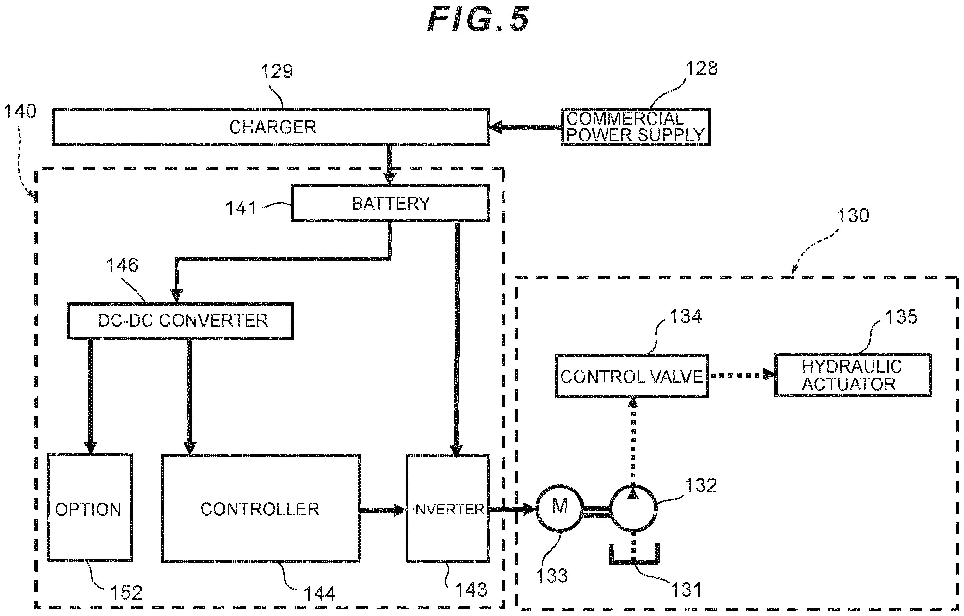

A construction machine such as that described above is typically provided with a hydraulic unit 130 configured so as to comprise a machine oil tank 131 for storing machine oil, a hydraulically driven hydraulic pump 132, an electric motor 133 for driving the hydraulic pump 132, a control valve 134 for controlling, e.g., the amount of machine oil ejected from the hydraulic pump 132, and a hydraulic actuator 135 configured from a plurality of hydraulic cylinders and hydraulic motors, as shown, e.g., in FIG. 5. The construction machine also comprises a power supply unit 140 for supplying electrical power to the electric motor 133. The power supply unit 140 is configured so as to comprise, e.g., a battery 141 for storing power from a commercial power supply 128 through a charger 129 and supplying DC power; an inverter 143 for converting the DC power from the battery 141 to AC power and supplying the AC power to the electric motor 133; a controller 144 for controlling the operation of the inverter 143; a DC-DC converter 146 for converting the DC power from the battery 141 to a predetermined voltage and outputting the voltage to the controller 144; and a front-illuminating lamp or another option 152 operated by the voltage obtained from the battery 141 through the DC-DC converter 146.

There are known hybrid-type construction machines (see Patent Document 1) in which the battery is configured from a main battery and a sub-battery, and the sub-battery is connected to the main battery via a DC-DC converter, whereby it is made possible to supply power to a controller such as that described above at a large capacity and in a stable manner. There also exist construction machines provided with a solar generation device in which the battery is configured from a first battery for supplying power to the electric motor and a second battery for supplying power to the controller, a charging device is configured from a first charging device for charging the first battery and a second charging device for charging the second battery, power is generated by receiving solar energy on the vehicle body, and electromotive force is supplied to the second charging device (e.g., see Patent Document 2).

A lithium ion battery is often used as the battery in a power supply unit of the above description. This battery is charged, e.g., at night or other times when no tasks are being performed. Known construction machines comprising a charging system include those in which regenerative energy, generated by driving the vehicle so as to revolve or perform a similar maneuver, is obtained to achieve an energy-conserving configuration. In an instance in which regenerative energy is thus used, a capacitor or another power-storing device that can deliver a certain amount of discharging time becomes necessary (e.g., see Patent Document 3).

### PRIOR ARTS LIST

### PATENT DOCUMENT

Patent Document 1: Japanese Laid-open Patent Publication No. 2007-107231 (A)
Patent Document 2: Japanese Laid-open Patent Publication No. 2007-28487 4(A)
Patent Document 3: Japanese Laid-open Patent Publication No. 2002-325378(A)

WO2007105462 discloses a power supply system for a hydraulic unit of an electric driven industrial vehicle with a first battery, a second battery, AC electric motors driven by AC power outputted by an inverter, a switch for executing or interrupting the charging of the second battery from the first battery dependent on the state of charge of the second battery.

### SUMMARY OF THE INVENTION

### PROBLEMS TO BE SOLVED BY THE INVENTION

In a construction machine having a plurality of batteries, such as those described above, there are instances in which a configuration is present so that the controller receives power from a first battery (main battery), and a light or similar option also receives power from the first battery (main battery). In such a configuration, a problem has been presented in that even if a second battery (sub-battery) is provided, power is always consumed from the first battery, and the lifespan of the first battery does not increase in substantive terms. Also, although the voltage conversion efficiency of a DC-DC converter generally increases with a higher rate of use, according to the above-mentioned configurations, power is directly supplied from the battery through the DC-DC converter to a lamp, a horn, or other devices associated with a low frequency of use but a high power consumption. Therefore, a problem is presented in that the use of the DC-DC converter is infrequent, and the voltage conversion efficiency of the DC-DC converter is poor.

Also, in a construction machine such as that described above in which regenerative energy is used, generally, the stored power is often converted into heat energy, and a configuration is often used in which the stored power is charged in a main battery. In such an instance where a configuration is used in which the stored energy is converted to heat energy or charged in a main battery, although it is possible to achieve an energy-saving configuration, a problem is presented in that in order to correct a voltage difference between the power-storing device and the main battery, it is necessary to, e.g., install a control circuit comprising a step up/down circuit, resulting in the configuration becoming more complex. A problem is also presented in that this increase in complexity increases cost, reduces maintainability, and results in an absence of cost merit.

With the above-mentioned problems in view, an object of the present invention is to provide a power supply system in which the rate of use of a DC-DC converter is increased whereby the efficiency of the DC-DC converter is increased, and the time of operation of a machine is extended whereby the number of charge/recharge cycles is reduced, and the lifespan of the battery is increased.

Another object of the present invention is to provide a power supply system in which it is possible to achieve an energy-saving configuration as well as make the configuration simpler, reduce cost, and enhance maintainability.

### MEANS TO SOLVE THE PROBLEMS

The power supply system of a hydraulic unit according to the present invention for solving the above-mentioned problems comprises: a first battery (e.g., a main battery 41 in embodiments) for outputting DC power; a second battery (e.g., a sub-battery 42 in the embodiments) for outputting DC power, the second battery being capable of being charged upon receiving a supply of power from the first battery; an inverter for converting DC power from the first battery into AC power, and outputting the AC power; a pump electrical motor (33) and a revolving motor (45) as AC electric motors, which are driven by AC power outputted by the inverter; and an inverter controller (e.g., a controller 44 in the embodiments), which is operated upon receiving DC power from the second battery and adapted to control the operation of the inverter; the power supply system comprising: a charge ON/OFF switch (e.g., a relay 47 in the embodiments) for switching on or switching off the charging of the second battery from the first battery; and a switch controller (e.g., the controller 44 in the embodiments) for detecting a remaining amount of electricity in the second battery, and switching on the charge ON/OFF switch when the remaining amount of electricity falls below a predetermined value, characterized in that the power supply system further comprising; regenerated power storing means (61,62,63), which are electrically connected to the second battery (42) and the AC electric motors (33,45), and are used to store regeneratively produced power by the AC electric motors (33,45); a regeneration ON/OFF switch (49) for switching on or switching off the electrical connection between the regenerated power storing means (61,62,63) and the second battery (42); a regeneration ON/OFF switch (49) operation unit for switching the regeneration ON/OFF switch (49) on or off based on a judgement whether the AC electric motors (33,45) are in a driving state or a stopped state; and when the regeneration ON/OFF switch operation unit switches on the regeneration ON/OFF switch (49), the second battery (42) is charged by the power stored in the regenerated power storing means (61,62,63), the regeneration ON/OFF switch (49) operation unit switches off the regeneration ON/OFF switch (49) upon judging that the AC electric motors (33,45) are in a driving state, and switches on the regeneration ON/OFF switch (49) upon judging that the AC electric motors (33,45) are in a stopped state, and the regenerated power storing means (61,62,63) comprises capacitors (61,62,63) for storing the regenerated driving energy of the AC electrical motors (33,45).

The above-mentioned power supply system preferably comprises: a hydraulic pump, which is driven by the AC electric motor and used to eject machine oil; and a hydraulic actuator, which is driven by the machine oil ejected from the hydraulic pump.

The above-mentioned power supply system preferably comprises a DC-DC converter for converting a DC voltage of the first battery, wherein the second battery is charged using power outputted from the DC-DC converter.

The above-mentioned power supply system preferably comprises regenerated power storing means, which is electrically connected to the second battery and the AC electric motor, and used to regeneratively produce power from a driving energy of the AC electric motor and store the regeneratively produced power in the second battery; a regeneration ON/OFF switch for switching on or switching off the electrical connection between the regenerated power storing means and the second battery; and a regeneration switch ON/OFF unit for judging whether the AC electric motor is in a driving state or a stopped state, and switching the regeneration ON/OFF switch on or off according to a result of the judging; wherein when the regeneration switch ON/OFF unit switches on the regeneration ON/OFF switch, the second battery is charged using power stored in the regenerated power storing means.

In the above-mentioned power supply system, the regeneration switch ON/OFF unit preferably switches off the regeneration ON/OFF switch upon judging that the AC electric motor is in a driving state, and switches on the regeneration ON/OFF switch upon judging that the AC electric motor is in a stopped state.

The above-mentioned power supply system preferably comprises a DC-DC converter for transforming power outputted from the first battery and the regenerated power storing means, wherein the second battery is charged using power transformed by the DC-DC converter.

### ADVANTAGEOUS EFFECTS OF THE INVENTION

The power supply system of a hydraulic unit according to the present invention comprises a first battery; a second battery; a switch for switching on/off the charging of the second battery from the first battery; and a switch controller for switching on the switch when the remaining amount of electricity in the second battery becomes equal to or less than a predetermined value. Accordingly, a configuration is present in which power is outputted from the first battery, and the second battery is charged, only when the remaining amount of electricity in the second battery has fallen, e.g., during work, therefore making it possible to minimize the amount of power consumed by the first battery, and to obtain a long lifespan overall for the first and the second batteries.

In an instance in which a DC-DC converter is provided between the first battery and the second battery, the first battery and the second battery are connected only in an instance in which the remaining amount of electricity in the second battery has dropped. Therefore, the rate of use of the DC-DC converter can be increased compared to conventional techniques, and the DC-DC converter can be caused to perform voltage conversion in an efficient manner.

A configuration is used in which the regenerated power storing means for storing the regenerated power from the AC electric motor is provided in connection with the second battery and the AC electric motor, and the stored power is used to charge the second battery instead of the first battery for supplying power to the inverter. A configuration is therefore possible in which a decision can be made as to whether or not to charge the second battery according to the driving state of the AC electric motor. It is thereby possible to save energy, obviate the need to, e.g., install step up/down means in the electric circuit, make the configuration simpler, and enhance maintainability.

In an instance in which the regeneration switch ON/OFF unit acts so as to switch on the switch when the AC electric motor is being driven and to switch off the switch when the AC electric motor is stopped, when the AC electric motor is driven, regenerated power can be stored from the corresponding driving energy, and when the AC electric motor is stopped, the stored regenerated energy can be used to charge the second battery. Therefore, the regenerated power can be obtained and stored in an effective manner when the motor is driven or stopped, and it becomes possible to further save energy.

Providing a DC-DC converter for transforming power outputted from the first battery and the regenerated power storing means results in a configuration where, at a minimum, the regenerated power storing means and the second battery are electrically connected only when the regeneration switch ON/OFF unit switches on the switch. Therefore, it becomes possible to cause the DC-DC converter to perform voltage conversion and charge the second battery in an efficient manner.

### BRIEF DESCRIPTION OF THE DRAWINGS

FIG. 1 is a perspective view of an excavator, shown as an example of a construction machine to which the power supply system of a hydraulic unit according to the present invention is applied;
FIG. 2 is a block diagram showing a hydraulic circuit and an electric circuit showing a power supply system (power supply system for a hydraulic unit) according to a first embodiment the present invention;
FIG. 3 is a block diagram showing a hydraulic circuit and an electric circuit showing a power supply system (power supply system for a hydraulic unit) according to a second embodiment of the present invention;
FIG. 4 is an electric circuit diagram showing an electric circuit configuration of the power supply system (particularly a charging system) according to the second embodiment; and
FIG. 5 is a block diagram showing a hydraulic circuit and an electric circuit showing a conventional power supply system of a hydraulic unit.

### DESCRIPTION OF THE EMBODIMENTS

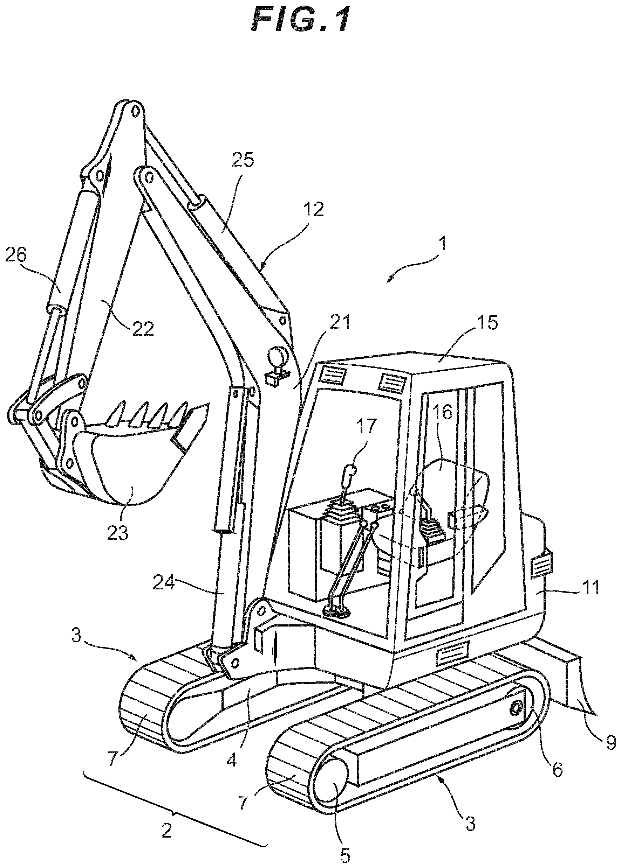

Claimed and advantageous embodiments of the present invention will now be described with reference to the accompanying drawings. FIG. 1 shows a crawler-type excavator 1 as an example of a construction machine in which the power supply system according to the present invention is applied. The excavator 1 is configured from a travel device 2 configured by travel mechanisms 3, 3 respectively provided to the left and right of a travel carriage 4 (vehicle body) that is substantially H-shaped in plan view, a blade 9 provided to a rear section of the travel carriage 4 so as to be capable of swinging up or down, a revolving base 11 revolvably provided on an upper section of the travel carriage 4, a shovel mechanism 12 provided to a front section of the revolving base 11, and an operator cabin 15 (vehicle body) for accommodating a driver vertically provided on an upper section of the revolving base 11.

Each of the pair of left and right travel mechanisms 3, 3 configuring the travel device 2 is configured from a track 7 wrapped around a driving sprocket wheel 5 and an idler wheel 6, the driving sprocket wheel 5 being provided to each of left and right front sections of the travel carriage 4, and the idler wheel 6 being provided to each of left and right rear sections of the travel carriage 4. The driving sprocket wheel 5 is rotatably driven by a travel motor comprising an electric motor or a hydraulic motor. The blade 9 is operated so as to be swingably moved by a hydraulically driven blade cylinder (not shown). The revolving base 11 is made to revolve by a revolving motor (not shown) comprising an electric motor or a hydraulic motor.

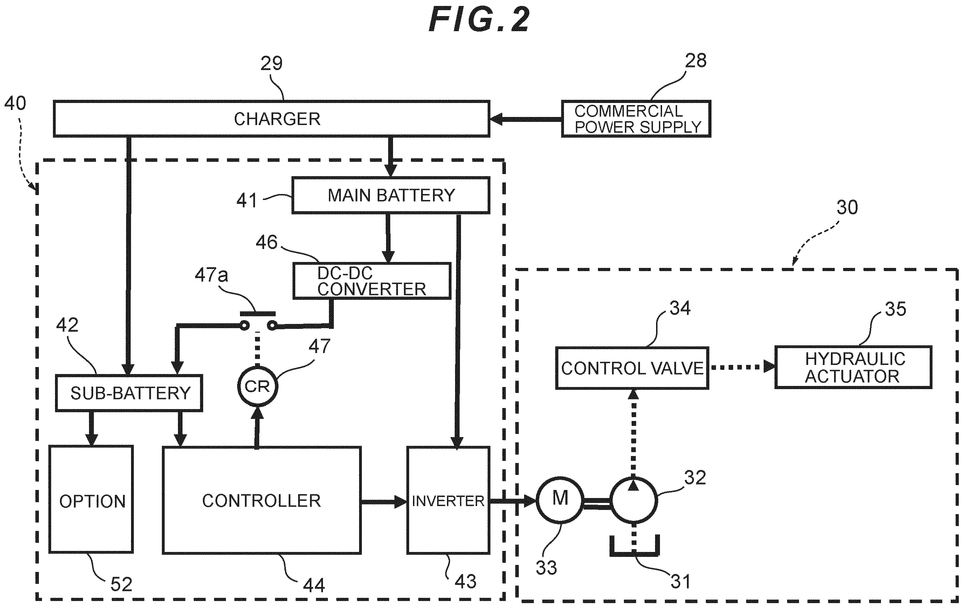

The shovel mechanism 12 is configured from a boom 21 pivotably connected to a front section of the revolving base 11 so as to be capable of a raising/lowering motion; an arm 22 pivotably connected to a distal end section of the boom 21 so as to be capable of swinging up or down within the raising/lowering plane of the boom 21; a bucket 23 pivotably connected to a distal end of the arm 22 so as to be capable of swinging up or down; and a hydraulically driven boom cylinder 24, arm cylinder 25, and bucket cylinder 26. The boom 21 is raised/lowered by the boom cylinder 24, the arm 22 is caused to swing by the arm cylinder 25, and the bucket 23 is caused to swing by the bucket cylinder 26. In the description below, the cylinders 24 through 26 and a blade cylinder of the blade 9 are collectively referred to as a hydraulic actuator 35 (see FIG. 2). The operator cabin 15 is formed so as to have a rectangular box shape enclosed from above, below, front, rear, left, and right, and is internally provided with an operator seat 16 on which the driver sits and an operating device 17 for performing an actuation operation on the travel device 2 or the shovel mechanism 12.

### First advantageous embodiment

A charging system according to a first advantageous embodiment of the present invention will be described with reference to FIG. 2. As shown in FIG. 2, the excavator 1 is provided with a hydraulic unit 30 for operating the hydraulic actuator 35 by supplying machine oil thereto. The hydraulic unit 30 is configured from a tank 31 for storing the machine oil, a hydraulic pump 32 for ejecting the machine oil at a predetermined hydraulic pressure and a predetermined flow amount, a pump electrical motor 33 for driving the hydraulic pump 32, and a control valve 34 for performing a control so as to cause the hydraulic actuator 35 to supply, according to a supply direction and supply amount corresponding to an operation performed on the operating device 17, the machine oil ejected from the hydraulic pump 32.

The pump electrical motor 33 is configured to be powered by a power supply system 40, and the pump electrical motor 33 is configured to be driven by this power. A description will now be given for the power supply system 40 with reference to FIG. 2. In FIG. 2, electrical or optical signal circuits are shown by solid arrows, and a hydraulic circuit is shown by dotted arrows. In the configuration shown in FIG. 2, each of the travel motor and the revolving motor comprises a hydraulic motor, and these motors are also included in the hydraulic actuator 35.

The power supply system 40 is configured so as to comprise a main battery 41, a sub-battery 42, an inverter 43, a controller 44, a DC-DC converter 46, and a relay 47. The main battery 41 and the sub-battery 42 are configured so as to be capable of being charged by receiving power through a charger 29 from an external commercial power supply 28 when, e.g., the tasks of the day are complete. In the present embodiment, a configuration is present in which the main battery 41 and the sub-battery 42 are provided, and as described further below, power is supplied to the controller 44 not from the main battery 41 but from the sub-battery 42. Therefore, it is possible to use the main battery 41 in an effective manner and extend the operation time of the excavator 1.

The main battery 41 is provided to supply power through the inverter 43 to the pump electrical motor 33. For example, a lithium-ion battery, an organic radical battery, or another secondary battery can be used for the main battery 41. The sub-battery 42 is provided to supply power to the controller 44 and to options 52 described further below. For example, a lithium-ion battery, a sealed lead battery, or a similar battery can be used for the sub-battery 42. A DC current is supplied from the main battery 41 at a higher voltage than that supplied from the sub-battery 42. The inverter 43 converts the DC power from the main battery 41 to AC power having a desired frequency, and supplies this AC power to the pump electrical motor 33.

The controller 44 performs an overall control of the power supply system 40 and functions by receiving power from the sub-battery 42. The controller 44 is capable of using a motor rotation speed detection sensor (not shown) and a hydraulic pressure and temperature sensor (not shown) to detect the rotation speed of the pump electrical motor 33 and the hydraulic pressure and temperature of the machine oil. The controller 44 generates, on the basis of the detected rotation speed and the hydraulic pressure and temperature, a control signal so that the hydraulic pressure supplied from the hydraulic pump 32 and the other variables are at an optimum state; and transmits the control signal to the inverter 43. For the DC-DC converter 46, one that is of a "step-down" type is used. The DC-DC converter 46 stabilizes the high-voltage DC current supplied from the main battery 41 by converting the DC current to a low-voltage DC current (e.g., DC 12.6 V).

A junction 47a of a relay 47 is connected between the DC-DC converter 46 and the sub-battery 42. A connection between the DC-DC converter 46 and the sub-battery 42 is established or disconnected by the relay 47. The junction 47a of the relay 47 is configured so as to be controlled by the controller 44 to connect or disconnect. The junction 47a is normally maintained in a disconnected state (OFF state). When a voltage is applied to the relay 47 from the controller 44, a switch is made to an ON state. The junction 47a switches to the ON state to establish a connection between the main battery 41 and the DC-DC converter 46 as well as the sub-battery 42. A configuration is present so that when the junction 47a switches to the ON state, power is supplied to the sub-battery 42 from the main battery 41 through the DC-DC converter 46 and the sub-battery 42 is charged.

The options 52 are configured from a front-illuminating lamp or other lights, or a controller for operating a stone-crushing mechanism or other sub-actuators. Each of the options 52 is operated by receiving power from the sub-battery 42. A configuration of such description makes it possible to determine the specification of the DC-DC converter 46 solely on the basis of the specification of the sub-battery 42 obtained from the power consumption of the options 52, and to select a DC-DC converter 46 that is superior to one selected according to conventional techniques. The capacity of the sub-battery 42 is determined on the basis of the power consumption of the control circuit, protective circuit, and the relay over the course of one day's operation; and other factors. The power consumed by individual options 52 such as the lights or the horn which are used according to the running state is not included in the calculation of the capacity of the sub-battery 42; the power is supplied from the main battery 41 via the sub-battery 42 according to need.

The controller 44 is capable of detecting the remaining amount of electricity in the sub-battery 42 on the basis of the values of the current and the voltage (power) supplied from the sub-battery 42, and is configured to control the operation of the relay 47 according to the detected remaining amount of electricity. Specifically, it is possible to determine, according to the remaining amount of electricity in the sub-battery 42, whether or not to charge the sub-battery 42 from the main battery 41. The controller 44 is capable of setting a predetermined upper limit and a lower limit as threshold values to determine whether or not to perform the charging. When the remaining amount of electricity in the sub-battery 42 falls below the lower limit (threshold value), a voltage is applied to the relay 47, the junction 47a is switched to the ON state, the junction of the relay 47 is connected, the sub-battery 42 is at once replenished with power from the main battery 41 through the DC-DC converter 46, and charging of the sub-battery 42 is started. Once charging has progressed, when the remaining amount of electricity in the sub-battery 42 reaches the upper limit (threshold value), the controller 44 switches the junction 47a to the OFF state and causes the junction 47a of the relay 47 to be blocked.

The DC-DC converter 46 can theoretically be omitted. However, by having the DC-DC converter 46 provided between the main battery 41 and the sub-battery 42, power is supplied at once to the sub-battery 42 from the main battery 41 through the DC-DC converter 46 when the junction 47a is switched to the ON state, making it possible to increase the rate of use of the DC-DC converter 46 to a certain extent, and together increase the power conversion efficiency. It is therefore possible to supply power to the sub-battery 42 from the main battery 41 in an efficient manner.

When the remaining amount of electricity in the sub-battery 42 is high, the options 52 are powered from the sub-battery 42 only, making it possible to reduce the power consumption from the main battery 41 and increase the operation time of the excavator 1. Power is supplied to the sub-battery 42 from the main battery 41 through the DC-DC converter 46 only when the remaining amount of electricity in the sub-battery 42 falls below the threshold value (or alternatively, falls to or below the threshold value) during, e.g., daytime work, making it possible to maintain the supply of power to the controller 44 and the options 52 even when the remaining amount of electricity in the sub-battery 42 has fallen to a low level.

In the excavator 1 according to the present embodiment, since the power supply system 40 is configured as described above, the sub-battery 42 can be charged using the main battery 41. Therefore, even when the remaining amount of electricity in the sub-battery 42 has fallen to a low level, the supply of power to the controller 44 and the options 52 can be maintained, and the operation time of the excavator 1 can be made longer than with conventional techniques.

In the present embodiment, a description was given for an example in which the controller 44 controls the action of the inverter 43 and the relay 47. However, similar effects can be obtained even if an inverter controller for controlling the operation of the inverter 43 and a relay controller for controlling the operation of the relay 47 are provided separately.

### Second embodiment as defined by the appended claims

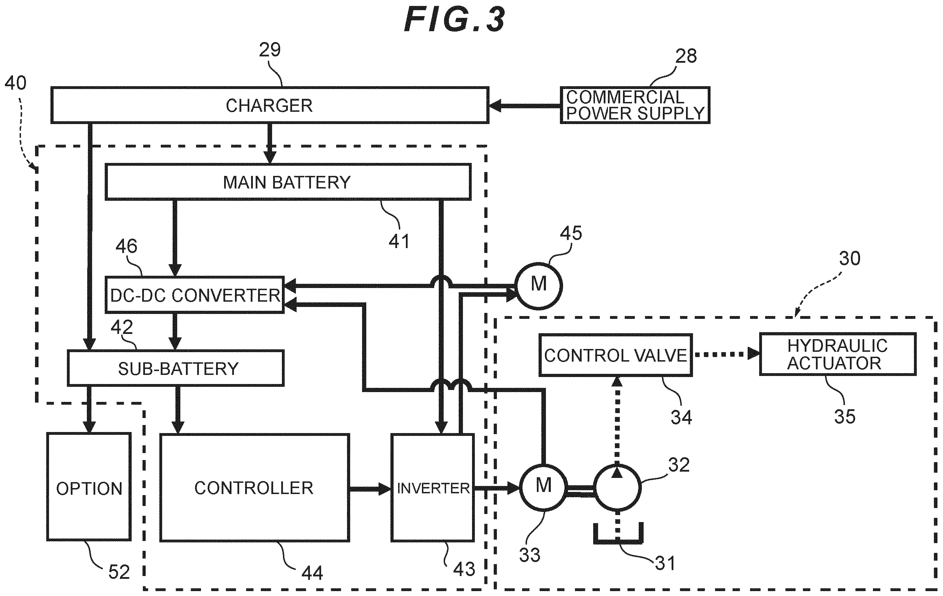

A charging system according to a second embodiment as defined by the appended claims will now be described with reference to FIG. 3. The charging system shown in FIG. 3 is also used in the excavator 1 shown in FIG. 1; however, since the configuration of the excavator 1 is identical to that described above, a description shall not be provided. Also, this charging system is provided with a hydraulic unit 30 for operating the hydraulic actuator 35 by supplying machine oil to the hydraulic actuator 35; however, since the hydraulic unit 30 has an identical structure as can be seen from a comparison between FIGS. 2 and 3, a description shall not be provided.

The pump electrical motor 33 is configured to be powered from a power supply system 40, and the pump electrical motor 33 is configured to be driven by this power. A description will now be given for the power supply system 40 with reference to FIG. 3. In FIG. 3, electrical or optical signal circuits are shown by solid arrows, and a hydraulic circuit is shown by dotted arrows. The system configurations shown in FIG. 2 resembles the system configuration shown in FIG. 3; portions having identical configurations are referenced with identical numerals in the descriptions, and the descriptions of portions having identical configurations overlap and are therefore partially omitted.

The power supply system 40 is configured so as to comprise a main battery 41, a sub-battery 42, an inverter 43, a controller 44, and a DC-DC converter 46. The main battery 41 is provided to supply power through the inverter 43 to the pump electrical motor 33 and a revolving motor 45. The sub-battery 42 is provided to supply power to the controller 44 and to options 52 described further below. A DC current is supplied from the main battery 41 at a higher voltage than that supplied from the sub-battery 42 (e.g., a voltage of 300 V can be used for the main battery 41, and a voltage of 24 V can be used for the sub-battery 42). The inverter 43 converts the DC power from the main battery 41 to AC power having a desired frequency, and supplies this AC power to the pump electrical motor 33 and the revolving motor 45.

The controller 44 performs an overall control of the power supply system 40 and functions by receiving power from the sub-battery 42. The controller 44 generates, on the basis of the rotation speed and the hydraulic pressure and temperature detected by a motor rotation speed detection sensor and a hydraulic pressure and temperature sensor, a control signal so that the hydraulic pressure supplied from the hydraulic pump 32 and the other variables are at an optimum state; and transmits the control signal to the inverter 43. The DC-DC converter 46 stabilizes the high-voltage DC current (e.g., DC 300 V) supplied from the main battery 41 by converting the DC current to a low-voltage DC current (e.g., DC 24 V).

The options 52 are configured from a front-illuminating lamp or other lights, or a controller for operating a stone-crushing mechanism or other sub-actuators. Each of the options 52 is operated by receiving power from the sub-battery 42. The capacity of the sub-battery 42 is determined on the basis of the power consumption of the control circuit, protective circuit, and the relay over the course of one day's operation; and other factors. The power consumption of the individual options 52 such as the lights or the horn which are used according to the running state is not included in the calculation of the capacity of the sub-battery 42; the power is supplied from the main battery 41 via the sub-battery 42 according to need.

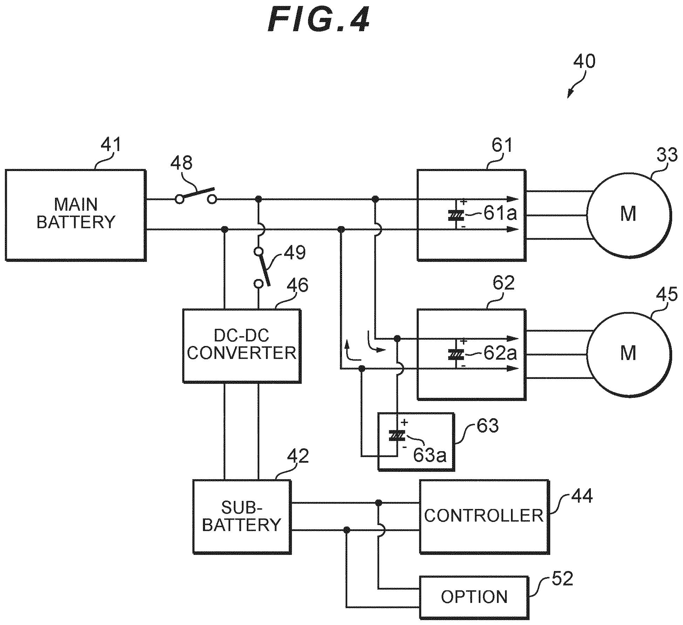

The revolving motor 45 in the present embodiment comprises an electric motor, as with the pump electrical motor 33; and is configured to be operated by receiving power from the inverter 43. The driving energy of the pump electrical motor 33 and the revolving motor 45 is regenerated, and the corresponding electrical energy is stored in the first through third capacitors 61, 62, 63 described further below. Specifically, as shown in FIG. 4, a first capacitor 61, a second capacitor 62, a third capacitor 63, a first switch 48, and a second switch 49 are arranged on an electric circuit forming the power supply system 40. Each of the first through third capacitors 61, 62, 63 is an electric double-layer capacitor configured so as to comprise an electric double layer 61a, 62a, 63a respectively. Each of the first switch 48 and the second switch 49 is configured so as to be switched on/off on the basis of a control signal from the controller 44. The first switch 48 acts to switch on/off an electric connection between the main battery 41 and the first through third capacitors 61, 62, 63, and the second switch 49 acts to switch on/off an electric connection between the DC-DC converter 46 and the first through third capacitors 61, 62, 63.

As shown in FIGS. 3 and 4, power outputted from the main battery 41 is charged in the sub-battery 42 through the DC-DC converter 46 when the controller 44 is used to operate the first switch 48 and the second switch 49 to an ON state. A configuration of such description makes it possible for the sub-battery 42 to be charged by the main battery 41 through the DC-DC converter 46 without stopping the supplying of power to the controller 44 even when the remaining amount of electricity in the sub-battery 42 has fallen to a low level, making it possible to extend the operation time of the excavator 1.

Energy obtained from the pump electrical motor 33 is converted to electrical power and stored in the first capacitor 61, and energy obtained from the revolving motor 45 is converted to electrical power and stored in the second capacitor 62. When the revolving motor 45 is continually driven in order to continually cause the vehicle to revolve, the controller 44 operates the second switch 49 to an OFF state, and power stored in the second capacitor 62 is supplied to the revolving motor 45. When the stored power is not required, such as when the revolving motor 45 is stopped, the controller 44 operates the second switch 49 to an ON state; whereby power stored in the second capacitor 62 is discharged to the DC-DC converter 46; and the discharged power is transformed by the DC-DC converter 46 and charged in the sub-battery 42. Similarly, power stored in the first capacitor 61 can be supplied to the pump electrical motor 33 or transformed by the DC-DC converter 46 and charged in the sub-battery 42.

The timing of the above-mentioned storing or discharging of power (charging of the sub-battery 42) may also be controlled as desired, by operating the second switch 49 controlled by the controller 44 to an ON/OFF state. However, having the second capacitor 62 store power and supply power to the revolving motor 45 when the revolving motor 45 is being driven, and having the power stored in the second capacitor 62 charged in the sub-battery 42 through the DC-DC converter 46 when the revolving motor 45 is stopped as described above makes it possible to charge the sub-battery 42 without any incidence of self-discharging even after the machine has stopped, making it possible to charge and use regenerative energy in an efficient manner.

Normally, the voltage of the main battery 41 is extremely high; therefore, no charging of the main battery 41 takes place from the first through third capacitors 61, 62, 63. Nevertheless, if a step-up circuit is provided between the main battery 41 and the first through third capacitors 61, 62, 63, charging of the main battery 41 is theoretically possible. However, in the present embodiment, the main battery 41 is not charged, and the power stored in the first through third capacitors 61, 62, 63 is transformed by the DC-DC converter 46 and charged in the sub-battery 42, whereby it is possible to make the circuit configuration of the power supply system 40 simpler.

The third capacitor 63 is arranged so as to be connected in parallel to the second capacitor 62. As with the second capacitor 62, the third capacitor 63 is also capable of storing the regenerative power of the revolving motor 45. Providing the third capacitor 63 makes it possible to obtain, and charge the sub-battery 42 with, a greater amount of regenerative power. The third capacitor 63 obtains and stores regenerative energy in a state in which the revolving motor 45 is operating, and starts charging the sub-battery 42 when the revolving motor 45 is stopped. However, the timing of the storing or the discharging (charging of the sub-battery 42) is not limited to the above.

In the power supply system 40 according to the present embodiment, the first through third capacitors 61, 62, 63, respectively having the electric double layer 61a, 62a, 63a, are provided; and the controller 44 switches the 49 on/off according to the driving state of the pump electrical motor 33 and the revolving motor 45, whereby it becomes possible to re-supply power to the pump electrical motor 33 and the revolving motor 45 and store power in the first through third capacitors 61, 62, 63 when the pump electrical motor 33 and the revolving motor 45 are being used. Also, when the pump electrical motor 33 and the revolving motor 45 are stopped, power stored in the first through third capacitors 61, 62, 63 is transformed by the DC-DC converter 46 and charged in the sub-battery 42. A configuration of such description makes it possible to utilize, in an effective manner, power used by the electric double layers 61a, 62a, 63a for initial charging, and otherwise utilize, in an effective manner, regenerative energy that has been obtained irrespective of whether the revolving motor 45 is being driven or stopped, making it possible to save energy.

Also, with regards to the electric circuit of the power supply system 40, a step-up circuit or a similar element is not required in an instance in which no charging of the main battery 41 takes place, therefore making it possible to obtain a simple configuration in which only the first through third capacitors 61, 62, 63 and the first and second switches 48, 49 are provided. It is therefore possible to minimize the cost associated with the power supply system 40 and increase maintainability, and to provide an electrical circuit that has a cost merit.

A similar effect as above can be obtained by connecting, in the power supply system 40 described above, a plurality of third capacitors 63 in parallel, or providing one or a plurality of additional capacitors to be connected in parallel to the first capacitor 61 as with the third capacitor 63. In other words, the configuration of the capacitors in the electric circuit is not limited to that shown in FIG. 4. The type of the capacitors is not limited to electric double-layer capacitors individually comprising the electric double layer 61a, 62a, 63a; a similar effect can be obtained by using a plate-, winding-, or other type of capacitor.

In the embodiments described above, a description was given for an example in which regenerative energy is obtained from the pump electrical motor 33 or the revolving motor 45. However, in an instance in which the travel motor is an electric motor, regenerative energy may be obtained from the travel motor.

In the embodiments described above, a description was given for an example in which the controller 44 performs both the controlling of the inverter 43 and the controlling of the ON/OFF [state] of the first switch 48 and the second switch 49. However, inverter control means for controlling the inverter 43 and an ON/OFF-switching unit for switching the ON/OFF [state] of the first switch 48 and the second switch 49 may be provided as separate bodies. Also, although the DC-DC converter 46 can theoretically be omitted, it is preferable that the DC-DC converter 46 is arranged as with the above-mentioned embodiment in order to stabilize the voltage in the electrical circuit.

In the first and second embodiments described above, a description was given for an example in which the commercial power supply 28 and the charger 29 are used as means for charging the main battery 41 and the sub-battery 42. However, the means for performing the charging is not limited to that described. For example, a solar panel for converting solar energy into electrical energy may be arranged on the vehicle body so that the solar panel performs the charging, or a dedicated generator may be used.

In the first advantageous embodiment and the second claimed embodiment, the excavator 1 was shown as an example of a machine comprising a hydraulic unit. However, the configuration of the hydraulic unit 30 is not limited to that described above. A machine to which the present invention can be applied is not limited to the excavator 1; the present invention can also be applied to an aerial work platform vehicle, mobile crane, forklift, loader, or other similar vehicles. The charging system according to the present invention can also be applied to a hydraulic unit of a machine other than construction machines, and to equipment other than a hydraulic unit.

### EXPLANATION OF NUMERALS AND CHARACTERS

- 30:: hydraulic unit
- 32:: hydraulic pump
- 33:: pump electrical motor (AC electric motor)
- 35:: hydraulic actuator
- 40:: power supply system
- 41:: main battery (first battery)
- 42:: sub-battery (second battery)
- 43:: inverter
- 44:: controller (inverter controller, switch controller)
- 46:: DC-DC converter
- 47:: relay (switch)

## Claims

1. A power supply system for a hydraulic unit comprising:
a first battery (41) for outputting DC power;
a second battery (42) for outputting DC power, the second battery (42) being capable of being charged upon receiving a supply of power from the first battery (41);
an inverter (43) for converting DC power from the first battery (41) into AC power, and outputting the AC power;
a pump electrical motor (33) and a revolving motor (45) as AC electric motors (33,45), which are driven by AC power outputted by the inverter (43); and
an inverter controller (44), which is operated upon receiving DC power from the second battery (42) and adapted to control the operation of the inverter (43);
the power supply system comprising:
a charge ON/OFF switch (47) for switching on or switching off the charging of the second battery (42) from the first battery (41); and
a switch controller (44) for detecting a remaining amount of electricity in the second battery (42), and switching on the charge ON/OFF switch (47) when the remaining amount of electricity falls below a predetermined value,
**characterized in that** the power supply system further comprising;
regenerated power storing means (61,62,63), which are electrically connected to the second battery (42) and the AC electric motors (33,45), and are used to store regeneratively produced power by the AC electric motors (33,45);
a regeneration ON/OFF switch (49) for switching on or switching off the electrical connection between the regenerated power storing means (61,62,63) and the second battery (42);
a regeneration ON/OFF switch (49) operation unit for switching the regeneration ON/OFF switch (49) on or off based on a judgement whether the AC electric motors (33,45) are in a driving state or a stopped state; and
when the regeneration ON/OFF switch operation unit switches on the regeneration ON/OFF switch (49), the second battery (42) is charged by the power stored in the regenerated power storing means (61,62,63),
the regeneration ON/OFF switch (49) operation unit switches off the regeneration ON/OFF switch (49) upon judging that the AC electric motors (33,45) are in a driving state, and switches on the regeneration ON/OFF switch (49) upon judging that the AC electric motors (33,45) are in a stopped state, and
the regenerated power storing means (61,62,63) comprise capacitors (61,62,63) for storing the regenerated driving energy of the AC electrical motors (33,45).

2. The power supply system according to Claim 1, comprising:
a hydraulic pump (32), which is driven by the pump electrical motor (33) and used to eject machine oil; and
a hydraulic actuator (35), which is driven by the machine oil ejected from the hydraulic pump (32).

3. The power supply system according to Claims 1 or 2, comprising a DC-DC converter (46) for converting a DC voltage of the first battery (41),
wherein the second battery (42) is charged using power outputted from the DC-DC converter (46).

4. The power supply system according to any one of Claims 1-3 comprising a DC-DC converter (46) for transforming power outputted from the first battery (41) and the regenerated power storing means (61,62,63),
wherein the second battery (42) is charged using power transformed by the DC-DC converter (46).

## Patentansprüche

1. Stromversorgungssystem für eine Hydraulikeinheit, das Folgendes umfasst:
eine erste Batterie (41) zum Ausgeben von Gleichstrom;
eine zweite Batterie (42) zum Ausgeben von Gleichstrom, wobei die zweite Batterie (42) dazu in der Lage ist, bei Empfang einer Zufuhr von Strom von der ersten Batterie (41) geladen zu werden;
einen Wechselrichter (43) zum Umwandeln von Gleichstrom von der ersten Batterie (41) in Wechselstrom und Ausgeben des Wechselstroms;
einen Pumpenelektromotor (33) und einen Drehmotor (45) als Wechselstromelektromotoren (33, 45), die durch durch den Wechselrichter (43) ausgegebenen Wechselstrom angetrieben werden; und
eine Wechselrichtersteuerung (44), die durch Empfang von Gleichstrom von der zweiten Batterie (42) betrieben wird und dazu ausgelegt ist, den Betrieb des Wechselrichters (43) zu steuern; wobei das Stromversorgungssystem Folgendes umfasst:
einen Lade-EIN/AUS-Schalter (47) zum Einschalten oder Ausschalten des Ladens der zweiten Batterie (42) von der ersten Batterie (41); und
eine Schaltersteuerung (44) zum Detektieren einer verbleibenden Menge an Elektrizität in der zweiten Batterie (42) und Einschalten des Lade-EIN/AUS-Schalters (47), wenn die verbleibende Menge an Elektrizität unter einen vorbestimmten Wert fällt,
**dadurch gekennzeichnet, dass** das Stromversorgungssystem ferner Folgendes umfasst:
Regenerativstromspeichermittel (61, 62, 63), die elektrisch mit der zweiten Batterie (42) und den Wechselstrommotoren (33, 45) verbunden sind und dazu verwendet werden, durch die Wechselstromelektromotoren (33, 45) regenerativ erzeugten Strom zu speichern;
einen Regeneration-EIN/AUS-Schalter (49) zum Einschalten oder Ausschalten der elektrischen Verbindung zwischen den Regenerativstromspeichermitteln (61, 62, 63) und der zweiten Batterie (42);
eine Regeneration-EIN/AUS-Schalter(49)-Betriebseinheit zum Einschalten oder Ausschalten des Regeneration-EIN/AUS-Schalters (49) basierend auf einer Beurteilung, ob sich die Wechselstromelektromotoren (33, 45) in einem Antriebszustand oder einem angehaltenen Zustand befinden, und
wenn die Regeneration-EIN/AUS-Schalter-Betriebseinheit den Regeneration-EIN/AUS-Schalter (49) einschaltet, die zweite Batterie (42) durch den in den Regenerativstromspeichermitteln (61, 62, 63) gespeicherten Strom geladen wird,
die Regeneration-EIN/AUS-Schalter(49)-Betriebseinheit den Regeneration-EIN/AUS-Schalter (49) ausschaltet, wenn die Beurteilung ergibt, dass sich die Wechselstromelektromotoren (33, 45) in einem Antriebszustand befinden, und den Regeneration-EIN/AUS-Schalter (49) einschaltet, wenn die Beurteilung ergibt, dass sich die Wechselstromelektromotoren (33, 45) in einem angehaltenen Zustand befinden, und
die Regenerativstromspeichermittel (61, 62, 63) Kondensatoren (61, 62, 63) zum Speichern der regenerierten Antriebsenergie der Wechselstromelektromotoren (33, 45) umfassen.

2. Stromversorgungssystem nach Anspruch 1, das Folgendes umfasst:
eine Hydraulikpumpe (32), die durch den Pumpenelektromotor (33) angetrieben wird und zum Ausstoßen von Maschinenöl verwendet wird; und
ein hydraulisches Betätigungsglied (35), das durch das von der Hydraulikpumpe (32) ausgestoßene Maschinenöl angetrieben wird.

3. Stromversorgungssystem nach Anspruch 1 oder 2, das einen DC-DC-Wandler (46) zum Umwandeln einer Gleichspannung der ersten Batterie (41) umfasst,
wobei die zweite Batterie (42) unter Verwendung von von dem DC-DC-Wandler (46) ausgegebenem Strom geladen wird.

4. Stromversorgungssystem nach einem der Ansprüche 1 bis 3, das einen DC-DC-Wandler (46) zum Umsetzen von von der ersten Batterie (41) und den Regenerativstromspeichermitteln (61, 62, 63) ausgegebenem Strom umfasst,
wobei die zweite Batterie (42) unter Verwendung von durch den DC-DC-Wandler (46) umgesetztem Strom geladen wird.

## Revendications

1. Système d'alimentation électrique destiné à une unité hydraulique, comprenant :
une première batterie (41) servant à fournir une alimentation CC ;
une deuxième batterie (42) servant à fournir une alimentation CC, la deuxième batterie (42) pouvant être chargée lorsqu'elle reçoit une alimentation électrique provenant de la première batterie (41) ;
un convertisseur (43) servant à convertir une alimentation CC provenant de la première batterie (41) en une alimentation CA, et à fournir l'alimentation CA ;
un moteur électrique de pompe (33) et un moteur tournant (45), qui sont des moteurs électriques CA (33, 45) et qui sont entraînés par l'alimentation CA fournie par le convertisseur (43) ; et
un contrôleur de convertisseur (44), qui est mis en fonctionnement lorsqu'il reçoit une alimentation CC provenant de la deuxième batterie (42) et qui permet de commander le fonctionnement du convertisseur (43) ; le système d'alimentation électrique comprenant :
un commutateur marche/arrêt de charge (47) servant à mettre en marche ou à arrêter la charge de la deuxième batterie (42) à partir de la première batterie (41) ; et
un contrôleur de commutateur (44) servant à détecter une quantité d'électricité restante dans la deuxième batterie (42), et à mettre sur marche le commutateur marche/arrêt de charge (47) lorsque la quantité d'électricité restante chute au-dessous d'une valeur prédéterminée,
le système d'alimentation électrique étant également **caractérisé en ce qu'il** comprend :
des moyens de stockage d'alimentation régénérée (61, 62, 63), qui sont reliés électriquement à la deuxième batterie (42) et aux moteurs électriques CA (33, 45), et qui servent à stocker l'énergie de régénération produite par les moteurs électriques CA (33, 45) ;
un commutateur marche/arrêt de régénération (49) servant à réaliser ou à couper la connexion électrique entre les moyens de stockage d'alimentation régénérée (61, 62, 63) et la deuxième batterie (42) ;
une unité d'exploitation du commutateur marche/arrêt de régénération (49) servant à mettre sur marche ou à arrêter le commutateur marche/arrêt de régénération (49) selon qu'il a été déterminé que les moteurs électriques CA (33, 45) sont dans un état de fonctionnement ou dans un état arrêté ; et
lorsque l'unité d'exploitation du commutateur marche/arrêt de régénération met sur marche le commutateur marche/arrêt de régénération (49), la deuxième batterie (42) est chargée par l'énergie stockée dans les moyens de stockage d'alimentation régénérée (61, 62, 63),
l'unité d'exploitation du commutateur marche/arrêt de régénération (49) met sur arrêt le commutateur marche/arrêt de régénération (49) lorsqu'il est déterminé que les moteurs électriques CA (33, 45) sont dans un état de fonctionnement, et met sur marche le commutateur marche/arrêt de régénération (49) lorsqu'il est déterminé que les moteurs électriques CA (33, 45) sont dans un état arrêté, et
les moyens de stockage d'alimentation régénérée (61, 62, 63) comprennent des condensateurs (61, 62, 63) servant à stocker l'énergie d'entraînement régénérée des moteurs électriques CA (33, 45).

2. Système d'alimentation électrique selon la revendication 1, comprenant :
une pompe hydraulique (32), qui est entraînée par le moteur de pompe électrique (33) et qui sert à éjecter l'huile de machine ; et
un actionneur hydraulique (35), qui est entraîné par l'huile de machine éjectée par la pompe hydraulique (32).

3. Système d'alimentation électrique selon la revendication 1 ou 2, comprenant un convertisseur CC-CC (46) servant à convertir une tension CC de la première batterie (41),
la deuxième batterie (42) étant chargée par l'alimentation fournie par le convertisseur CC-CC (46).

4. Système d'alimentation électrique selon l'une quelconque des revendications 1 à 3, comprenant un convertisseur CC-CC (46) servant à transformer l'alimentation fournie par la première batterie (41) et les moyens de stockage d'alimentation régénérée (61, 62, 63),
la deuxième batterie (42) étant chargée par l'alimentation transformée par le convertisseur CC-CC (46).
